# EUROPEAN PATENT APPLICATION

(11) **EP 4 803 573 A1**
(43) Date of publication of application: **09.09.2026**
(21) Application number: 24907090.5
(22) Date of filing: 26.11.2024
(51) Int. Cl.: C08L 9/06, B60C 1/00, C08K 13/02, C08L 93/04, C08K 3/04, C08K 3/22, C08K 3/36, C08K 5/548

(54) **RUBBER COMPOSITION FOR TIRES, AND TIRE**

(30) Priority: 22.12.2023 JP 2023216411; 22.12.2023 JP 2023216414
(71) Applicant: The Yokohama Rubber Co., Ltd., Hiratsuka-shi, Kanagawa 254-8601 (JP)
(72) Inventor: HIJIKATA, Kensuke, Hiratsuka-shi, Kanagawa 254-8601 (JP)
(74) Representative: Dilg, Haeusler, Schindelmann Patentanwaltsgesellschaft mbH
(86) International application number: PCT/JP2024/041769
(87) International publication number: WO 2025/134702

(57) **Abstract**

The present invention discloses a rubber composition for a tire including 5 to 120 parts by mass of a hydrogenated rosin ester resin having an acid value of 30 mgKOH/g or less per 100 parts by mass of a diene rubber consisting only of a styrene-butadiene copolymer rubber.

## Description

### Technical Field

The present invention relates to a rubber composition for a tire and a tire using the same and particularly relates to a rubber composition for a tire capable of maintaining or improving wear resistance and improving wet grip performance and a tire using the same.

The present invention also relates to a rubber composition for a tire capable of maintaining or improving steering stability and improving both dry grip performance and warm-up performance and a tire using the same.

### Background Art

Typically, as pneumatic racing tires, tires for running on dry road surfaces and tires for running on wet road surfaces are provided, and optimal tires are selected according to the weather and road surface conditions during running. For the racing tires for running on wet road surfaces, the related art adopts a method of blending a large amount of a filler having a high specific surface area and resin to enhance wet grip performance but has a problem in that wear resistance is reduced.

For the racing tires for running on dry road surfaces, a method of blending a large amount of carbon black having a small particle diameter and resin to improve grip performance on dry road surfaces (dry grip performance) is known. These blending methods, however, may take time for the dry grip performance to be activated, thereby reducing warm-up performance. Meanwhile, blending of a softening agent such as resin having a low softening point or oil has been studied, but none of such methods can provide dry grip performance and steering stability in a compatible manner.

Techniques of blending a rosin resin in a rubber composition for a tire are found in Patent Documents 1 to 3 and the like, but none of these disclose or suggest a technique described below of blending a specific amount of a hydrogenated rosin ester resin having an acid value of 30 mgKOH/g or less into a diene rubber consisting only of a styrene-butadiene copolymer rubber.

### Citation List

### Patent Literature

Patent Document 1: JP 2018-193444 A
Patent Document 2: JP 7151083 B
Patent Document 3: JP 2021-095465 A

### Summary of Invention

### Technical Problem

Accordingly, an object of the present invention is to provide a rubber composition for a tire capable of maintaining or improving wear resistance and improving wet grip performance and a tire using the same.

Another object of the present invention is to provide a rubber composition for a tire capable of maintaining or improving steering stability and improving both dry grip performance and warm-up performance and a tire using the same.

### Solution to Problem

As a result of diligent research, the inventor of the present invention found that the objects described above can be achieved by blending a specific amount of a hydrogenated rosin ester resin having an acid value within a specific range into a diene rubber consisting only of a styrene-butadiene copolymer rubber and completed the present invention.

That is, the present invention provides a rubber composition for a tire including 5 to 120 parts by mass of a hydrogenated rosin ester resin having an acid value of 30 mgKOH/g or less per 100 parts by mass of a diene rubber consisting only of a styrene-butadiene copolymer rubber.

The present invention also provides a rubber composition for a tire including: per 100 parts by mass of a diene rubber consisting only of a styrene-butadiene copolymer rubber, 5 to 120 parts by mass of a hydrogenated rosin ester resin having an acid value of 30 mgKOH/g or less; and 50 to 200 parts by mass of carbon black having a nitrogen adsorption specific surface area (N₂SA) of 100 to 500 m²/g.

### Advantageous Effects of Invention

The rubber composition for a tire according to an embodiment of the present invention includes 5 to 120 parts by mass of a hydrogenated rosin ester resin having an acid value of 30 mgKOH/g or less per 100 parts by mass of a diene rubber consisting only of a styrene-butadiene copolymer rubber, thereby providing a rubber composition for a tire capable of maintaining or improving wear resistance and improving wet grip performance and a tire using the same.

The rubber composition for a tire according to an embodiment of the present invention includes: per 100 parts by mass of a diene rubber consisting only of a styrene-butadiene copolymer rubber, 5 to 120 parts by mass of a hydrogenated rosin ester resin having an acid value of 30 mgKOH/g or less; and 50 to 200 parts by mass of carbon black having a nitrogen adsorption specific surface area (N₂SA) of 100 to 500 m²/g, thereby providing a rubber composition for a tire capable of maintaining or improving steering stability and improving both dry grip performance and warm-up performance and a tire using the same.

Since the rosin ester resin used in an embodiment of the present invention has an acid value of 30 mgKOH/g or less, the rosin ester resin has higher compatibility with a styrene-butadiene copolymer rubber than resin having an acid value higher than 30 mgKOH/g and does not exhibit excessive reactivity when a vulcanization accelerator is used, thereby suppressing a decrease in strength at break and hardness. Since the rosin ester resin s hydrogenated and therefore exhibits the effect of enhanced compatibility with the styrene-butadiene copolymer rubber. Accordingly, it is presumed that it a rubber composition for a tire capable of maintaining or improving wear resistance and improving wet grip performance. In addition, since the rosin ester resin has the above-mentioned characteristics, in embodiments in which carbon black is blended, steering stability can be maintained or improved, and dry grip performance and warm-up performance can be enhanced.

### Description of Embodiments

The present invention will be described in more detail below.

A rubber composition for a tire including 5 to 120 parts by mass of a hydrogenated rosin ester resin having an acid value of 30 mgKOH/g or less per 100 parts by mass of a diene rubber consisting only of a styrene-butadiene copolymer rubber, is sometimes referred to as Embodiment (1) of the present invention.

A rubber composition for a tire including: per 100 parts by mass of a diene rubber consisting only of a styrene-butadiene copolymer rubber, 5 to 120 parts by mass of a hydrogenated rosin ester resin having an acid value of 30 mgKOH/g or less; and 50 to 200 parts by mass of carbon black having a nitrogen adsorption specific surface area (N₂SA) of 100 to 500 m²/g may be referred to as Embodiment (2) of the present invention.

### Diene Rubber

In Embodiments (1) and (2) of the present invention, the diene rubber used in the present invention consists only of a styrene-butadiene copolymer rubber (SBR). The molecular weight and the microstructure of the SBR are not particularly limited, and the SBR may be terminal-modified with, for example, an amine, amide, silyl, alkoxysilyl, carboxyl, or hydroxyl group or may be epoxidized.

The weight-average molecular weight (Mw) of the SBR is not limited but preferably ranges from 100000 to 5000000, more preferably from 200000 to 3000000, and still more preferably from 300000 to 2000000, for the reason that the effects of the present invention are improved.

The weight-average molecular weight (Mw) and the number-average molecular weight (Mn) as used in the present description are standard polystyrene equivalent values as determined by gel permeation chromatography (GPC) measurement.

In Embodiment (2) of the present invention, the SBR used in the present invention preferably has a styrene content of less than 35 mass%, and more preferably 30 mass% or less. Setting the styrene content as described above lowers the polarity of the SBR, and the SBR can have even higher compatibility with the rosin ester resin.

### Rosin Ester Resin

In Embodiments (1) and (2) of the present invention, the rosin ester resin used in the present invention may be obtained by reacting a raw material rosin ester such as gum rosin, tall oil rosin, or wood rosin with an alcohol, and polymerizing the resulting product in the presence of a catalyst. The esterification reaction and the polymerization reaction may be carried out under known conditions. The obtained rosin ester resin may be purified as necessary, and the purified rosin ester resin usually has a color tone of 10 or less in terms of Gardner color scale.

The rosin ester resin used in an embodiment of the present invention has an acid value of 30 mgKOH/g or less. When the acid value is 30 mgKOH/g or less, the rosin ester resin has higher compatibility with the SBR, and can exhibit the above effects. In an embodiment of the present invention, the acid value is more preferably 20 mgKOH/g or less.

The rosin ester resin used in an embodiment of the present invention is hydrogenated. The hydrogenation provides higher compatibility with the styrene-butadiene copolymer rubber, and thus an effect of improving the strength at break is exhibited. The hydrogenation is preferably carried out until the Hazen unit color number (JIS K 0071-1) of the rosin ester resin reaches 200 or less.

From the viewpoint of improving the effects of the present invention, the hydroxyl value of the rosin ester resin used in an embodiment of the present invention is preferably 50 mgKOH/g or less, and more preferably 30 mgKOH/g or less. When the hydroxyl value is 50 mgKOH/g or less, the rosin ester resin has higher compatibility with the SBR, and wet grip performance and dry grip performance can be further enhanced.

From the viewpoint of improving the effects of the present invention, as for the rosin ester resin used in an embodiment of the present invention, the weight-average molecular weight preferably ranges from 200 to 1800, more preferably from 300 to 1500, the glass transition temperature preferably ranges from 20 to 100°C, more preferably from 30 to 90, and the softening point (JIS K 6220-1) preferably ranges from 60 to 150°C, more preferably from 70 to 140.

As the rosin ester resin according to an embodiment of the present invention, commercially available products can be used, and examples thereof include KE-359 (a hydrogenated rosin ester resin, acid value = 13 mgKOH/g, hydroxyl value = 45 mgKOH/g), KE-100 (a hydrogenated rosin ester resin, acid value = 6 mgKOH/g, hydroxyl value = 0 mgKOH/g), and KE-311 (a hydrogenated rosin ester resin, acid value = 7 mgKOH/g, hydroxyl value = 0 mgKOH/g) available from Arakawa Chemical Industries, Ltd.

### Blending Proportion

In Embodiment (1) of the present invention, the rubber composition of an embodiment of the present invention includes 5 to 120 parts by mass of a hydrogenated rosin ester resin having an acid value of 30 mgKOH/g or less per 100 parts by mass of a diene rubber consisting only of a styrene-butadiene copolymer rubber. When the blended amount of the rosin ester resin is less than 5 parts by mass, the effects of the present invention cannot be exhibited because the blended amount is too small. Meanwhile, when the blended amount is more than 120 parts by mass, strength at break is deteriorated. The blended amount of the rosin ester resin is preferably 15 to 110 parts by mass, and more preferably 25 to 100 parts by mass per 100 parts by mass of the diene rubber.

In Embodiment (2) of the present invention, the rubber composition of an embodiment of the present invention includes: per 100 parts by mass of a diene rubber consisting only of a styrene-butadiene copolymer rubber, 5 to 120 parts by mass of a hydrogenated rosin ester resin having an acid value of 30 mgKOH/g or less; and 50 to 200 parts by mass of carbon black having a nitrogen adsorption specific surface area (N₂SA) of 100 to 500 m²/g. When the blended amount of the rosin ester resin is less than 5 parts by mass, the effects of the present invention cannot be exhibited because the blended amount is too small. Meanwhile, when the blended amount is more than 120 parts by mass, hardness (100°C) is deteriorated. The blended amount of the rosin ester resin is preferably 5 to 120 parts by mass, more preferably 15 to 110 parts by mass, and particularly preferably 25 to 100 parts by mass per 100 parts by mass of the diene rubber. When the blended amount of carbon black is less than 50 parts by mass, hardness (100°C) is deteriorated, and when the blended amount of carbon black exceeds 200 parts by mass, hardness (20°C) is deteriorated. The blended amount of carbon black preferably ranges from 50 to 200 parts by mass, more preferably from 70 to 180 parts by mass, per 100 parts by mass of the diene rubber. The range of the nitrogen adsorption specific surface area (N₂SA) of carbon black is an effective range for exhibiting the effects of the present invention, and a more preferable range of the nitrogen adsorption specific surface area (N₂SA) ranges from 120 to 400 m²/g. The nitrogen adsorption specific surface area (N₂SA) is a value determined in accordance with JIS K 6217-2.

In Embodiment (1) of the present invention, from the viewpoint of further improving the effects of the present invention, the rubber composition for a tire of the present invention preferably contains silica having a nitrogen adsorption specific surface area (N₂SA) of E100 to 300 m²/g.

The nitrogen adsorption specific surface area (N₂SA) more preferably ranges from 120 to 260 m²/g.

The blended amount of silica preferably ranges from 50 to 250 parts by mass, more preferably from 70 to 200 parts by mass, per 100 parts by mass of the diene rubber. The nitrogen adsorption specific surface area (N₂SA) of silica is a value determined in accordance with JIS K 6217-2. In an embodiment of the present invention, silica made from a biomass material such as rice husks may be used.

In Embodiment (1) of the present invention, from the viewpoint of further improving the effects of the present invention, the rubber composition for a tire of the present invention preferably contains aluminum hydroxide.

The blended amount of aluminum hydroxide is preferably 10 parts by mass or more, and more preferably 15 to 60 parts by mass per 100 parts by mass of the diene rubber.

In Embodiment (1) of the present invention, the rubber composition for a tire of an embodiment of the present invention can contain a silane coupling agent. The silane coupling agent is preferably a silane coupling agent having a mercapto group from the viewpoint of high reactivity. The blended amount of the silane coupling agent preferably ranges from 2.5 to 30 mass%, more preferably from 5 to 12 mass% with respect to silica.

### Liquid Aromatic Vinyl-Conjugated Diene Rubber

In Embodiment (2) of the present invention, the rubber composition for a tire of the present invention preferably contains a liquid aromatic vinyl-conjugated diene rubber having a glass transition temperature (Tg) of -40°C or higher. By blending such a liquid aromatic vinyl-conjugated diene rubber, the glass transition temperature (Tg) of the rubber composition increases, and dry grip performance can be enhanced. The liquid aromatic vinyl-conjugated diene rubber is compatible with the SBR, enhances dispersibility of the rosin ester resin used in an embodiment of the present invention, and can enhance the effects of the present invention.

The liquid aromatic vinyl-conjugated diene rubber is preferably a liquid styrene-butadiene copolymer (liquid SBR). As the liquid SBR, a liquid SBR having a weight-average molecular weight of 2000 to 40000, and preferably 3000 to 20000, can be used. The glass transition temperature of the liquid SBR is -40°C or higher as described above and preferably ranges from -20°C to - 5°C. As the liquid SBR, a commercially available liquid SBR can be used, and examples thereof include RICON 100 available from Cray Valley, and L-SBR 820, available from Kuraray Co., Ltd. For the Tg in an embodiment of the present invention, a thermogram is measured by differential scanning calorimetry (DSC) at a rate of temperature increase of 20°C/min, and the temperature at the midpoint of the transition region is defined as the glass transition temperature.

The liquid aromatic vinyl-conjugated diene rubber used in an embodiment of the present invention is liquid at 23°C. Therefore, it is distinguished from the diene rubber that is solid at this temperature.

The blended amount of the liquid aromatic vinyl-conjugated diene rubber preferably ranges from 5 to 50 parts by mass, more preferably from 10 to 45 parts by mass, per 100 parts by mass of the diene rubber.

### Additional Components

The rubber composition for a tire according to an embodiment of the present invention can contain: in addition to the components described above, vulcanizing or crosslinking agents; vulcanization or crosslinking accelerators; zinc oxide; various fillers, such as clay, talc, and calcium carbonate; anti-aging agents; plasticizers; and various other additives commonly blended in rubber compositions. The additives are kneaded by a common method to obtain a composition, which can be used for vulcanization or crosslinking. The blended amount of these additives may also be a known common blended amount, as long as the object of the present invention is not impaired.

In Embodiment (1) of the present invention, since the rubber composition for a tire of the present invention is capable of maintaining or improving wear resistance and improving wet grip performance, the rubber composition can be suitably used for a tread of a tire, especially for a cap tread, and can be preferably used for a tread of a racing tire, especially for a cap tread. The tire according to an embodiment of the present invention is preferably a pneumatic tire and can be inflated with air; an inert gas, such as nitrogen; and another gas.

In Embodiment (2) of the present invention, since the rubber composition for a tire of the present invention is capable of maintaining or improving steering stability and improving both dry grip performance and warm-up performance, the rubber composition can be suitably used for a tread of a tire, especially for a cap tread and can be preferably used for a tread of a racing tire, especially for a cap tread. The tire according to an embodiment of the present invention is preferably a pneumatic tire and can be inflated with air; an inert gas, such as nitrogen; and another gas.

### Examples

The present invention will be described below in more detail by way of Examples and Comparative Examples, but the present invention is not limited to these Examples.

### Standard Example 1, Examples 1 to 7, and Comparative Examples 1 to 4 Preparation of Sample

For the composition (part by mass) shown in Table 1, the components other than the vulcanization accelerators and sulfur were kneaded for 5 minutes in a 1.7-L sealed Banbury mixer. The rubber was then discharged outside of the mixer and cooled at room temperature. Thereafter, the rubber was placed in the mixer again, and the vulcanization accelerators and sulfur were then added to the mixture and further kneaded to obtain a rubber composition. Next, the resulting rubber composition was pressure-vulcanized in a predetermined mold at 160°C for 20 minutes to produce a vulcanized rubber test piece, and then the test methods shown below were used to measure the physical properties of the vulcanized rubber test piece.

Strength at break: In accordance with JIS K 6251, a dumbbell-shaped No. 3 sample piece was punched out from the above-mentioned vulcanized rubber test piece and subjected to a tensile test at a tensile speed of 500 mm/min, and the elongation at break (%) was measured. The results are expressed as index values with Standard Example 1 being assigned the value of 100. A larger index value indicates superior strength at break and better wear resistance.

Wet grip performance: tan δ (0°C) was measured under conditions of an initial strain of 10%, an amplitude of ±2%, and a frequency of 20 Hz by using a viscoelasticity spectrometer available from Toyo Seiki Seisaku-sho, Ltd., in accordance with JIS K 6394, and the obtained value was used for evaluation of wet grip performance. The results are expressed as index values with Standard Example 1 being assigned the value of 100. A larger index value indicates better wet grip performance.

The results are shown in Table 1.

**[Table 1]**

| | Standard Example 1 | Comparative Example 1 | Comparative Example 2 | Comparative Example 3 | Example 1 | Example 2 | Example 3 | Example 4 | Example 5 | Example 6 | Comparative Example 4 | Example 7 |
|---|---|---|---|---|---|---|---|---|---|---|---|---|
| SBR *1 | 137.5 | 137.5 | 137.5 | 137.5 | 137.5 | 137.5 | 137.5 | 137.5 | 137.5 | 137.5 | 96.3 | 137.5 |
| BR *2 | - | - | - | - | - | - | - | - | - | - | 30.0 | - |
| Silica 1 *3 | 100.0 | 100.0 | 100.0 | 100.0 | 100.0 | 100.0 | 100.0 | 100.0 | 100.0 | - | 100.0 | 100.0 |
| Silica 2 *4 | - | - | - | - | - | - | - | - | - | 100.0 | - | - |
| Carbon black *5 | 10.0 | 10.0 | 10.0 | 10.0 | 10.0 | 10.0 | 10.0 | 10.0 | 10.0 | 10.0 | 10.0 | 10.0 |
| Aluminum hydroxide *6 | - | - | - | - | - | - | - | - | 20.0 | - | - | - |
| Resin-1 *7 | 60.0 | - | - | - | - | - | - | - | - | - | - | - |
| Resin-2 *8 | - | 60.0 | - | - | - | - | - | - | - | - | - | - |
| Resin-3 *9 | - | - | 60.0 | - | - | - | - | - | - | - | - | - |
| Resin-4 *10 | - | - | - | 60.0 | - | - | - | - | - | - | - | - |
| Resin-5 *11 | - | - | - | - | 60.0 | - | - | - | - | - | - | - |
| Resin-6 *12 | - | - | - | - | - | 60.0 | - | - | - | - | - | - |
| Resin-7 *13 | - | - | - | - | - | - | 60.0 | 60.0 | 60.0 | 60.0 | 60.0 | 110.0 |
| Silane coupling agent-1 *14 | 8.0 | 8.0 | 8.0 | 8.0 | 8.0 | 8.0 | 8.0 | - | - | 8.0 | 8.0 | 8.0 |
| Silane coupling agent-2 *15 | - | - | - | - | - | - | - | 8.0 | 8.0 | - | - | - |
| Oil *16 | 20.0 | 20.0 | 20.0 | 20.0 | 20.0 | 20.0 | 20.0 | 20.0 | 20.0 | 20.0 | 28.2 | 20.0 |
| Stearic acid *17 | 2.0 | 2.0 | 2.0 | 2.0 | 2.0 | 2.0 | 2.0 | 2.0 | 2.0 | 2.0 | 2.0 | 2.0 |
| Zinc oxide *18 | 2.0 | 2.0 | 2.0 | 2.0 | 2.0 | 2.0 | 2.0 | 2.0 | 2.0 | 2.0 | 2.0 | 2.0 |
| Anti-aging agent *19 | 2.0 | 2.0 | 2.0 | 2.0 | 2.0 | 2.0 | 2.0 | 2.0 | 2.0 | 2.0 | 2.0 | 2.0 |
| Vulcanization accelerator-1 *20 | 1.5 | 1.5 | 1.5 | 1.5 | 1.5 | 1.5 | 1.5 | 1.5 | 1.5 | 1.5 | 1.5 | 1.5 |
| Vulcanization accelerator-2 *21 | 2.0 | 2.0 | 2.0 | 2.0 | 2.0 | 2.0 | 2.0 | 2.0 | 2.0 | 2.0 | 2.0 | 2.0 |
| Sulfur *22 | 1.5 | 1.5 | 1.5 | 1.5 | 1.5 | 1.5 | 1.5 | 1.5 | 1.5 | 1.5 | 1.5 | 1.5 |
| Measurement results | | | | | | | | | | | | |
| Strength at break (wear resistance) | 100 | 98 | 97 | 105 | 104 | 107 | 106 | 106 | 104 | 102 | 102 | 100 |
| tan δ (0°C) (wet grip performance) | 100 | 102 | 97 | 98 | 106 | 105 | 104 | 108 | 113 | 110 | 96 | 114 |

| | | | | | | | | | | | | |
|---|---|---|---|---|---|---|---|---|---|---|---|---|
| The notes in Table 1 are as follows. *1: SBR (Nipol NS522 available from ZS Elastomer Co., Ltd., oil extender content = 37.5 parts by mass per 100 parts by mass of SBR) *2: BR (Nipol BR1220 available from Zeon Corporation) *3: Silica-1 (Ultrasil 7000 GR available from Evonik Industries AG (N₂SA 171 m²/g) *4: Silica-2 (Zeosil 1085GR available from Solvay (N₂SA 86 m²/g) *5: Carbon black (SEAST 9 available from Tokai Carbon Co., Ltd.) *6: Aluminum hydroxide (BF013 available from Nippon Light Metal Co., Ltd.) *7: Resin-1 (Gum rosin WW available from Arakawa Chemical Industries, Ltd., non-hydrogenated rosin resin, acid value 170 mgKOH/g, hydroxyl value 0 mgKOH/g) *8: Resin-2 (ARKON P-90 available from Arakawa Chemical Industries, Ltd., hydrogenated petroleum resin, acid value 0 mgKOH/g, hydroxyl value 0 mgKOH/g) *9: Resin-3 (ESTER GUM 105 available from Arakawa Chemical Industries, Ltd., non-hydrogenated rosin ester resin, acid value 14 mgKOH/g, hydroxyl value 0 mgKOH/g) *10: Resin-4 (KR-140 available from Arakawa Chemical Industries, Ltd., hydrogenated rosin resin, acid value 147 mgKOH/g, hydroxyl value 0 mgKOH/g) *11: Resin-5 (KE-359 available from Arakawa Chemical Industries, Ltd., hydrogenated rosin ester resin, acid value 13 mgKOH/g, hydroxyl value 45 mgKOH/g) *12: Resin-6 (KE-100 available from Arakawa Chemical Industries, Ltd., hydrogenated rosin ester resin, acid value 6 mgKOH/g, hydroxyl value 0 mgKOH/g) *13: Resin-7 (KE-311 available from Arakawa Chemical Industries, Ltd., hydrogenated rosin ester resin, acid value 7 mgKOH/g, hydroxyl value 0 mgKOH/g) *14: Silane coupling agent-1 (Si69 available from Evonik Industries AG, bis(3-triethoxysilylpropyl)tetrasulfide) *15: Silane coupling agent-2 (NXT-Z45 available from Momentive, silane coupling agent having mercapto group) *16: Oil (Extract No. 4S available from Showa Shell Sekiyu K.K.) *17: Stearic acid (Beads Stearic Acid YR available from NOF Corporation) *18: Zinc oxide (Zinc Oxide III available from Seido Chemical Industry Co., Ltd.) *19: Anti-aging agent (6PPD available from Flexsys) *20: Vulcanization accelerator-1 (SANCELER D-G available from Sanshin Chemical Industry Co., Ltd.) *21: Vulcanization accelerator-2 (NOCCELER CZ-G available from Ouchi Shinko Chemical Industrial Co., Ltd.) *22: Sulfur (Golden Flower oil treated sulfur powder available from Tsurumi Chemical Industry Co., Ltd.) | | | | | | | | | | | | |

From the results shown in Table 1, it is found that the rubber compositions for tires of Examples maintained wear resistance or provided improved wear resistance and provided improved wet grip performance as compared with Standard Example 1 because the rubber compositions contain 5 to 120 parts by mass of a hydrogenated rosin ester resin having an acid value of 30 mgKOH/g or less per 100 parts by mass of a diene rubber consisting only of a styrene-butadiene copolymer rubber.

In contrast, Comparative Example 1, which is an example in which a hydrogenated petroleum resin was used, exhibited a deteriorated strength at break and poor wear resistance.

Comparative Example 2, which is an example in which a non-hydrogenated rosin ester resin was used, exhibited deteriorated wear resistance and deteriorated wet grip performance.

Comparative Example 3, which is an example in which a rosin ester resin having an acid value exceeding the upper limit specified in the present invention was used, exhibited deteriorated wet grip performance.

Comparative Example 4, which is an example in which a butadiene rubber (BR) was blended, exhibited deteriorated wet grip performance.

### Standard Example 2, Examples 8 to 13, and Comparative Examples 5 to 9 Preparation of Sample

For the composition (part by mass) shown in Table 2, the components other than the vulcanization accelerators and sulfur were kneaded for 5 minutes in a 1.7-L sealed Banbury mixer. The rubber was then discharged outside of the mixer and cooled at room temperature. Thereafter, the rubber was placed in the mixer again, and the vulcanization accelerators and sulfur were then added to the mixture and further kneaded to obtain a rubber composition. Next, the resulting rubber composition was pressure-vulcanized in a predetermined mold at 160°C for 20 minutes to produce a vulcanized rubber test piece, and then the test methods shown below were used to measure the physical properties of the vulcanized rubber test piece.

Warm-up performance: Hardness was measured at 20°C in accordance with JIS K 6253, and the obtained value was used for evaluation of dry grip performance. The results are expressed as index values with Standard Example 2 being assigned the value of 100. A smaller index value indicates superior warm-up performance.

Steering stability: Hardness was measured at 100°C in accordance with JIS K 6253, and the obtained value was used for evaluation of steering stability. The results are expressed as index values with Standard Example 2 being assigned the value of 100. A larger index value indicates higher hardness at 100°C and superior steering stability.

Dry grip performance: tan δ (100°C) was measured under conditions of an initial strain of 10%, an amplitude of ±2%, and a frequency of 20 Hz by using a viscoelasticity spectrometer available from Toyo Seiki Seisaku-sho, Ltd., in accordance with JIS K 6394, and the obtained value was used for evaluation of dry grip performance. The results are expressed as index values with Standard Example 2 being assigned the value of 100. A larger index value indicates better dry grip performance.

The results are shown in Table 2.

**[Table 2]**

| | Standard Example 2 | Comparative Example 5 | Comparative Example 6 | Comparative Example 7 | Example 8 | Example 9 | Example 10 | Example 11 | Example 12 | Comparative Example 8 | Comparative Example 9 | Example 13 |
|---|---|---|---|---|---|---|---|---|---|---|---|---|
| SBR-1 *1 | 137.5 | 137.5 | 137.5 | 137.5 | 137.5 | 137.5 | 137.5 | - | 137.5 | 137.5 | 96.25 | 137.5 |
| SBR-2 *2 | - | - | - | - | - | - | - | 137.5 | - | - | - | - |
| BR *3 | - | - | - | - | - | - | - | - | - | - | 30.0 | - |
| Carbon black-1 *4 | 100.0 | 100.0 | 100.0 | 100.0 | 100.0 | 100.0 | 100.0 | 100.0 | 100.0 | - | 100.0 | 100.0 |
| Carbon black-2 *5 | - | - | - | - | - | - | - | - | - | 100.0 | - | - |
| Resin-1 *6 | 75.0 | - | - | - | - | - | - | - | - | - | - | - |
| Resin-2 *7 | - | 75.0 | - | - | - | - | - | - | - | - | - | - |
| Resin-3 *8 | - | - | 75.0 | - | - | - | - | - | - | - | - | - |
| Resin-4 *9 | - | - | - | 75.0 | - | - | - | - | - | - | - | - |
| Resin-5 *10 | - | - | - | - | 75.0 | - | - | - | - | - | - | - |
| Resin-6 *11 | - | - | - | - | - | 75.0 | - | - | - | - | - | - |
| Resin-7 *12 | - | - | - | - | - | - | 75.0 | 75.0 | 75.0 | 75.0 | 75.0 | 110.0 |
| Liquid SBR *13 | - | - | - | - | - | - | - | - | 30.0 | - | - | - |
| Oil *14 | 30.0 | 30.0 | 30.0 | 30.0 | 30.0 | 30.0 | 30.0 | 30.0 | - | 30.0 | 30.0 | 30.0 |
| Stearic acid *15 | 2.0 | 2.0 | 2.0 | 2.0 | 2.0 | 2.0 | 2.0 | 2.0 | 2.0 | 2.0 | 2.0 | 2.0 |
| Zinc oxide *16 | 2.0 | 2.0 | 2.0 | 2.0 | 2.0 | 2.0 | 2.0 | 2.0 | 2.0 | 2.0 | 2.0 | 2.0 |
| Anti-aging agent *17 | 2.0 | 2.0 | 2.0 | 2.0 | 2.0 | 2.0 | 2.0 | 2.0 | 2.0 | 2.0 | 2.0 | 2.0 |
| Vulcanization accelerator *18 | 2.0 | 2.0 | 2.0 | 2.0 | 2.0 | 2.0 | 2.0 | 2.0 | 2.0 | 2.0 | 2.0 | 2.0 |
| Sulfur *19 | 1.5 | 1.5 | 1.5 | 1.5 | 1.5 | 1.5 | 1.5 | 1.5 | 1.5 | 1.5 | 1.5 | 1.5 |
| Measurement results | | | | | | | | | | | | |
| Hardness (20°C) (warm-up performance) | 100 | 97 | 104 | 107 | 98 | 96 | 96 | 95 | 97 | 90 | 87 | 95 |
| Hardness (100°C) (steering stability) | 100 | 97 | 103 | 106 | 104 | 103 | 104 | 105 | 105 | 96 | 97 | 100 |
| tan δ (100°C) (dry grip performance) | 100 | 96 | 105 | 110 | 106 | 107 | 105 | 110 | 112 | 95 | 95 | 113 |

| | | | | | | | | | | | | |
|---|---|---|---|---|---|---|---|---|---|---|---|---|
| The notes in Table 2 are as follows. *1: SBR-1 (Nipol 1739 available from Zeon Corporation, styrene content = 40 mass%, oil extender content = 37.5 parts by mass per 100 parts by mass of SBR) *2: SBR-2 (Nipol 1723 available from Zeon Corporation, styrene content = 23.5 mass%, oil extender content = 37.5 parts by mass per 100 parts by mass of SBR) *3: BR (Nipol BR1220 available from Zeon Corporation) *4: Carbon black-1 (SEAST 9 available from Tokai Carbon Co., Ltd. (N₂SA 142 m²/g)) *5: Carbon black-2 (Show Black N339 available from Cabot Japan (N₂SA 94 m²/g)) *6: Resin-1 (Gum rosin WW available from Arakawa Chemical Industries, Ltd., non-hydrogenated rosin resin, acid value 170 mgKOH/g, hydroxyl value 0 mgKOH/g) *7: Resin-2 (ARKON P-90 available from Arakawa Chemical Industries, Ltd., hydrogenated petroleum resin, acid value 0 mgKOH/g, hydroxyl value 0 mgKOH/g) *8: Resin-3 (ESTER GUM 105 available from Arakawa Chemical Industries, Ltd., non-hydrogenated rosin ester resin, acid value 14 mgKOH/g, hydroxyl value 0 mgKOH/g) *9: Resin-4 (KR-140 available from Arakawa Chemical Industries, Ltd., hydrogenated rosin resin, acid value 147 mgKOH/g, hydroxyl value 0 mgKOH/g) *10: Resin-5 (KE-359 available from Arakawa Chemical Industries, Ltd., hydrogenated rosin ester resin, acid value 13 mgKOH/g, hydroxyl value 45 mgKOH/g) *11: Resin-6 (KE-100 available from Arakawa Chemical Industries, Ltd., hydrogenated rosin ester resin, acid value 6 mgKOH/g, hydroxyl value 0 mgKOH/g) *12: Resin-7 (KE-311 available from Arakawa Chemical Industries, Ltd., hydrogenated rosin ester resin, acid value 7 mgKOH/g, hydroxyl value 0 mgKOH/g) *13: Liquid SBR (RICON 100 available from Cray Valley, weight-average molecular weight = 6400, Tg = -15°C) *14: Oil (Extract No. 4S available from Showa Shell Sekiyu K.K.) *15: Stearic acid (Beads Stearic Acid YR available from NOF Corporation) *16: Zinc oxide (Zinc Oxide III available from Seido Chemical Industry Co., Ltd.) *17: Anti-aging agent (6PPD available from Flexsys) *18: Vulcanization accelerator (NOCCELER CZ-G available from Ouchi Shinko Chemical Industrial Co., Ltd.) *19: Sulfur (Golden Flower oil treated sulfur powder available from Tsurumi Chemical Industry Co., Ltd.) | | | | | | | | | | | | |

From the results shown in Table 2, it is found that the rubber compositions for tires of Examples maintained steering stability or provided improved steering stability and provided improved dry grip performance and improved warm-up performance as compared with Standard Example 2 because the rubber compositions contain 5 to 120 parts by mass of a hydrogenated rosin ester resin having an acid value of 30 mgKOH/g or less, and 50 to 200 parts by mass of carbon black having a nitrogen adsorption specific surface area (N₂SA) of 100 to 500 m²/g per 100 parts by mass of a diene rubber consisting only of a styrene-butadiene copolymer rubber.

In contrast, Comparative Example 5, which is an example in which a hydrogenated petroleum resin was used, exhibited deteriorated steering stability and deteriorated dry grip performance.

Comparative Example 6, which is an example in which a non-hydrogenated rosin ester resin was used, exhibited deteriorated warm-up performance.

Comparative Example 7, which is an example in which a rosin ester resin having an acid value exceeding the upper limit specified in the present invention was used, exhibited deteriorated warm-up performance.

Comparative Example 8, which is an example in which the nitrogen adsorption specific surface area (N₂SA) of carbon black was out of the range specified in the present invention, exhibited deteriorated steering stability and deteriorated dry grip performance.

Comparative Example 9, which is an example in which a butadiene rubber (BR) was blended, exhibited deteriorated steering stability and deteriorated dry grip performance.

The present disclosure includes the following embodiments.

### Embodiment 1:

A rubber composition for a tire, the rubber composition including
5 to 120 parts by mass of a hydrogenated rosin ester resin having an acid value of 30 mgKOH/g or less per 100 parts by mass of a diene rubber consisting only of a styrene-butadiene copolymer rubber.

### Embodiment 2:

The rubber composition for a tire according to Embodiment 1, wherein the rosin ester resin has a hydroxyl value of 50 mgKOH/g or less.

### Embodiment 3:

The rubber composition for a tire according to Embodiment 1 or 2, further including 50 to 250 parts by mass of silica having a nitrogen adsorption specific surface area (N₂SA) of 100 to 300 m²/g per 100 parts by mass of the diene rubber.

### Embodiment 4:

The rubber composition for a tire according to any one of Embodiments 1 to 3, further including 10 parts by mass or more of aluminum hydroxide per 100 parts by mass of the diene rubber.

### Embodiment 5:

The rubber composition for a tire according to Embodiment 3, further containing 2.5 to 30 mass% of a silane coupling agent having a mercapto group with respect to the silica.

### Embodiment 6:

A rubber composition for a tire, the rubber composition including:
per 100 parts by mass of a diene rubber consisting only of a styrene-butadiene copolymer rubber,
5 to 120 parts by mass of a hydrogenated rosin ester resin having an acid value of 30 mgKOH/g or less; and
50 to 200 parts by mass of carbon black having a nitrogen adsorption specific surface area (N₂SA) of 100 to 500 m²/g.

### Embodiment 7:

The rubber composition for a tire according to Embodiment 6, wherein the styrene-butadiene copolymer rubber has a styrene content of less than 35 mass%.

### Embodiment 8:

The rubber composition for a tire according to Embodiment 6 or 7, further including 5 to 50 parts by mass of a liquid aromatic vinyl-conjugated diene rubber having a glass transition temperature (Tg) of -40°C or higher per 100 parts by mass of the diene rubber.

### Embodiment 9:

A tire in which the rubber composition for a tire according to any one of Embodiments 1 to 8 is used in a cap tread.

## Claims

1. A rubber composition for a tire, the rubber composition comprising:
5 to 120 parts by mass of a hydrogenated rosin ester resin having an acid value of 30 mgKOH/g or less per 100 parts by mass of a diene rubber consisting only of a styrene-butadiene copolymer rubber.

2. The rubber composition for a tire according to claim 1, wherein the rosin ester resin has a hydroxyl value of 50 mgKOH/g or less.

3. The rubber composition for a tire according to claim 1, further comprising 50 to 250 parts by mass of silica having a nitrogen adsorption specific surface area (N₂SA) of 100 to 300 m²/g per 100 parts by mass of the diene rubber.

4. The rubber composition for a tire according to claim 1, further comprising 10 parts by mass or more of aluminum hydroxide per 100 parts by mass of the diene rubber.

5. The rubber composition for a tire according to claim 3, further comprising 2.5 to 30 mass% of a silane coupling agent having a mercapto group with respect to the silica.

6. A rubber composition for a tire, the rubber composition comprising:
per 100 parts by mass of a diene rubber consisting only of a styrene-butadiene copolymer rubber,
5 to 120 parts by mass of a hydrogenated rosin ester resin having an acid value of 30 mgKOH/g or less; and
50 to 200 parts by mass of carbon black having a nitrogen adsorption specific surface area (N₂SA) of 100 to 500 m²/g.

7. The rubber composition for a tire according to claim 6, wherein the styrene-butadiene copolymer rubber has a styrene content of less than 35 mass%.

8. The rubber composition for a tire according to claim 6, further comprising 5 to 50 parts by mass of a liquid aromatic vinyl-conjugated diene rubber having a glass transition temperature (Tg) of -40°C or higher per 100 parts by mass of the diene rubber.

9. A tire in which the rubber composition for a tire according to claim 1 is used in a cap tread.
